# EUROPÄISCHE PATENTSCHRIFT

(11) **EP 0 855 528 B1**
(45) Veröffentlichungstag und Bekanntmachung des Hinweises auf die Patenterteilung: **24.10.2001**
(21) Anmeldenummer: 97121400.2
(22) Anmeldetag: 05.12.1997
(51) Int. Cl.: F16C 29/04, B23Q 1/26

(54) **Vorrichtung zum Andrücken einer Laufrolle an eine Führungsschiene**
Device pushing a roller against a guide rail
Dispositif pour appuyer un galet contre un rail de guidage

(30) Priorität: 22.01.1997 DE 19701990
(43) Veröffentlichungstag der Anmeldung: 29.07.1998
(73) Patentinhaber: RK Rose + Krieger GmbH & Co. KG Verbindungs- und Positioniersysteme, D-32423 Minden (DE)
(72) Erfinder: Frankenberger, Eckart, Dipl.-Ing., 64285 Darmstadt (DE); Franke, Oliver, 64297 Darmstadt (DE); Geissler, Harro, 64287 Darmstadt (DE)
(74) Vertreter: Stracke, Alexander, Dipl.-Ing.

(56) Entgegenhaltungen:
- DE-A- 4 316 647
- DE-A- 19 517 926
- DE-C- 950 162
- DE-U- 8 905 064
- DE-U- 9 319 226
- DE-U- 9 407 424
- DE-U- 29 514 271
- GB-A- 2 256 408
- US-A- 1 761 275

## Beschreibung

Die vorliegende Erfindung betrifft eine Vorrichtung zum Andrücken einer Laufrolle an eine Führungsschiene gemäß dem Oberbegriff des Anspruches 1.

Führungsschlitten, die mit Hilfe von Laufrollen leicht auf den Tragrohren, die üblicherweise aus Profilrohren bestehen, verfahrbar sind, finden in vielfältigen Bereichen Verwendung. So dienen die Führungsschlitten beispielsweise als Positioniereinrichtungen, wobei auf den Führungsschlitten Verarbeitungswerkzeuge o.dgl. befestigt sind.

In jedem Fall ist eine sehr genaue, spielfreie Führung auf dem Tragrohr gewünscht.

Um auftretendes, durch Toleranzen verursachtes Spiel zwischen den Laufrollen und den zugeordneten Führungsschienen auszugleichen, ist es aus der DE 89 05 064 U1 bekannt, jeweils eine von zwei sich gegenüberliegenden Laufrollen in Richtung der zugeordneten Führungsschiene bewegbar zu lagern, um diese gegen die Führungsschiene zu drücken und anschließend in dieser Position zu arretieren.

Als Mittel zum Andrücken der Laufrolle an die zugeordnete Führungsschiene sind beispielsweise Schrauben bekannt, die an beiden Enden mit einem Gewinde versehen sind, während der dazwischenliegende Schaft eine exzentrische Querschnittskontur aufweist.

Mit einem Gewindeteil wird diese Schraube in den Führungsschlitten eingedreht, während auf den anderen Gewindeteil eine Kontermutter geschraubt wird.

Zum Andrücken der Laufrolle an die Führungsschiene wird diese Schraube so weit gedreht, bis durch die Exzenterwirkung das vorhandene Spiel ausgeglichen ist und die Laufrolle direkt an der Führungsschiene anliegt. Danach erfolgt die Arretierung der Laufrolle in dieser Stellung durch die Kontermutter.

Allerdings ergeben sich dabei mehrere Probleme, die sich nachteilig auf die Funktionsfähigkeit des Führungsschlittens auswirken.

So ist der Anpreßdruck, mit dem über den Exzenterschaft die Laufrolle an die Führungsschiene gepreßt wird, nicht genau definiert und von daher nicht reproduzierbar.

Es bleibt somit dem Fingerspitzengefühl der die Einstellung vornehmenden Person überlassen, mit welchem Druck die Laufrolle an der Führungsschiene anliegt.

Dabei kann es naturgemäß zu einem zu hohen Anpreßdruck kommen, der zu einer Beschädigung der Führungsschiene und Laufrolle im Sinne einer Delle führen kann, mit der Folge, daß ein gleichmäßiges Verfahren des Führungsschlittens nicht gewährleistet ist.

Andererseits kann bei einem zu geringen Anpreßdruck das vorhandene Spiel, das ja durch das Verspannen der Laufrolle überwunden werden soll, nicht beseitigt werden, was gleichfalls eine exakte Verfahrbarkeit des Führungsschlittens behindert.

Ein weiterer Nachteil ergibt sich bei der bekannten Vorrichtung dadurch, daß sich die Schraube beim Kontern nach dem Andrücken mittels Exzenterschaftes an die Laufrolle ein Stück weit versetzt und verkantet. Das heißt, die Längsachse der Schraube und die Achse der Laufrolle laufen nicht mehr parallel bzw. deckungsgleich, so daß ein einseitiger Kraftübertrag, ja sogar eine Punktbelastung des Exzenters auf den Innenring der Laufrolle bzw. zwischen Führungsschiene und Laufrolle gegeben ist.

Natürlich führt dies gleichfalls zu einer Einschränkung der Verschiebegenauigkeit des Führungsschlittens und eines frühzeitigen Verschleißes der Laufrolle.

Aus der DE 94 07 424 U1 ist eine weitere Vorrichtung zum Andrücken von Laufrollen an eine Führungsschiene bekannt.
Als darin gezeigte und beschriebene Mittel zum Andrücken der Laufrolle, sind elastische Vorspannringe vorgesehen, die im Zusammenwirken mit Zugbolzen die Laufrollen an die zugeordnete Führungsschiene drücken. Dabei sind an jeder Seite des Führungsschlittens zwei Laufrollen vorgesehen, die fest in einem Kassettengehäuse gelagert sind und zwischen denen die Vorspannringe mit einem der Zugbolzen angeordnet sind. Zum Andrücken der Laufrollen wird dabei das ganze Kassettengehäuse relativ zum Führungsschlitten bzw. zu einer dazugehörenden Tischplatte in Richtung der Führungsschiene verschoben.

Der vorliegenden Erfindung liegt daher die Aufgabe zugrunde, eine Vorrichtung der gatttungsgemäßen Art so zu gestalten, daß die Laufrolle mit einem gleichbleibenden, reproduzierbaren Anpreßdruck gegen die Führungsschiene drückbar ist.

Diese Aufgabe wird durch eine Vorrichtung gelöst, die die Merkmale des Anspruches 1 aufweist.

Während im beschriebenen Stand der Technik die Schraube gleichzeitig Spann- und Arretierfunktion übernimmt, was zu den geschilderten Nachteilen führt, ist für das Andrücken der Laufrolle an die Führungsschiene nun eine separate Einrichtung vorgesehen, die einen genau definierten Druck auf die Laufrolle ausübt, während die Schraube nunmehr ausschließlich Arretierfunktion gegenüber der Laufrolle hat.

In jedem Fall, auch beispielsweise dann, wenn die Laufrolle nachgespannt werden muß, bleibt der Anpreßdruck, mit dem die Laufrolle an die Führungsschiene angedrückt wird, gleichgroß.

In der angedrückten Endstellung wird die Laufrolle durch Festdrehen der Schraube arretiert. Um einen radialen Spielausgleich zu ermöglichen, ist der von der Laufrolle überdeckte Schaftbereich der Schraube in seinem Durchmesser kleiner als der Innendurchmesser der Laufrolle. Die Differenz zwischen beiden Abmaßen ergibt sich aus der maximal möglichen Toleranz, die auszugleichen ist.

Nach einer vorteilhaften Ausgestaltung der Erfindung besteht das Andruckelement aus zwei parallel und mit Abstand zueinander verlaufenden Druckstiften, die in gleichem Abstand zur Mittelachse der Laufrolle an diese angreifen. Gegenüberliegend liegt die Laufrolle punkt- oder linienförmig an der Führungsschiene an, die üblicherweise aus einem in das Profilrohr eingelegten Rundstab besteht.

Durch den Zweipunktangriff der Druckstifte und die Einzelpunktanlage der Laufrolle an der Führungsschiene ergibt sich so eine Dreipunktauflage, die eine besonders günstige Kraftverteilung beim Andrücken ermöglicht.

Das Andruckelement insgesamt ist zum Gebrauch an dem Führungsschlitten fixiert, wobei in diesem Öffnungen vorgesehen sind, durch die die Druckstifte in den Innenraum des Führungsschlittens geführt werden können, in dem die Laufrolle angeordnet ist.

Dabei kann das Andruckelement mit einer Halteplatte in einer führungsschlittenseitigen T-Nut in Andruckrichtung der Druckstifte fixiert gehalten werden.

Ein Lösen des Andruckelementes von dem Führungsschlitten ist nach einem Zurückziehen der Druckstifte aus den entsprechenden Durchgangsöffnungen des Führungsschlittens durch ein seitliches Verschieben aus der stirnseitig offenen T-Nut ohne weiteres möglich.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
Figur 1 einen Längsschnitt durch die erfindungsgemäße Vorrichtung,

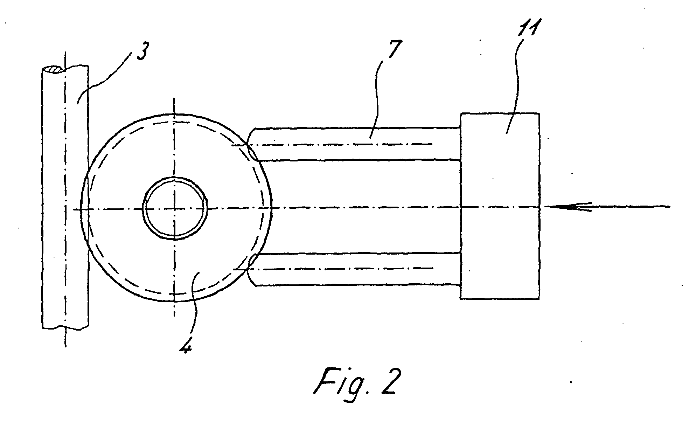

Figur 2 in schematischer Darstellung eine Draufsicht auf einen Teil der Vorrichtung.

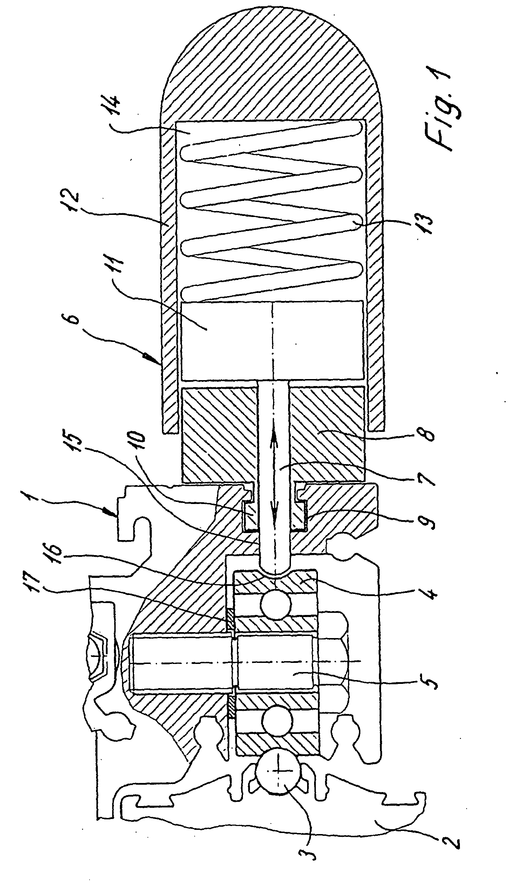

In der Fig. 1 ist ein Führungsschlitten 1 erkennbar, der hin und her verfahrbar auf einem Tragrohr 2 aufliegt.

Dabei ist an einer Längsseite des Tragrohres eine Führungsschiene 3 in Form eines Rundstabes festgelegt, an der sich eine Laufrolle 4, die mit dem Führungsschlitten 1 durch eine Schraube 5 fest verbunden ist, abstützt.

Auf der der dargestellten Laufrolle 4 gegenüberliegenden, nicht gezeigten Längsseite des Tragrohres 2 sind gleichfalls Laufrollen am Führungsschlitten 1 befestigt, jedoch nicht verstellbar.

Demgegenüber ist die erkennbare Laufrolle 4 quer zur Längsachsrichtung des Tragrohres 2 an die Führungsschiene 3 andrückbar, wozu die Schraube 5 im Führungsbereich mit der Laufrolle 4 in ihrem Durchmesser kleiner ist als der Innendurchmesser der Laufrolle 4. Innerhalb dieser Durchmesserdifferenz ist die Laufrolle 4 radial bewegbar.

Zum Andrücken der Laufrolle 4 an die Führungsschiene 3 ist an dem Führungsschlitten 1 ein Andruckelement 6 angeschlossen, das eine Halteplatte 8 aufweist, die mit einem Gleitstück 10 versehen ist, das in einer T-Nut 9 des Führungsschlittens 1, die parallel zur Führungsschiene 3 verläuft, längsverschiebbar einliegt.

Durch die Halteplatte 8 und das Gleitstück 10 sind zwei, eine Gabel bildende Druckstifte 7 geführt, die mit einer Druckplatte 11 verbunden sind, an der sich eine Druckfeder 13 abstützt.

Andererseits liegt die als Schraubenfeder ausgebildete Druckfeder 13 am Grund einer Ausnehmung 14 einer Hülse 12 an, die sowohl die Druckplatte 11 als auch zumindest einen Teil der Halteplatte 8 seitlich umschließt.

Die Druckstifte 7, die zwei Bohrungen 15 durchtreten, die am Grund der T-Nut 9 vorgesehen sind, liegen in Andrückstellung an der Laufrolle 4 an, wobei sie symmetrisch zur Mitte der Laufrolle angeordnet sind.

Diese ist umlaufend mit einer im Querschnitt konkaven Rille 16 versehen, deren Krümmungsradius dem Krümmungsradius der Führungsschiene 3 entspricht. Die der Laufrolle 4 zugewandten Enden der Druckstifte 7 sind entsprechend der konkaven Kontur der Rolle 16 ballig geformt.

Zum Andrücken der Laufrolle 4 an die Führungsschiene 3 ist die Schraube 5 gelöst, so daß die Laufrolle 4 durch die Druckstifte 7 mit der durch die Druckfeder 13 exakt definiert aufgebrachten Druckkraft an die Führungsschiene 3 angedrückt werden kann. Danach wird die Schraube 5 festgezogen, wobei über den Schraubenkopf sowie eine zwischen dem Innenring der als Kugellager ausgebildeten Laufrolle 4 und dem tragenden Teil des Führungsschlittens 1 angeordnete Scheibe 17 ein Reibschluß hergestellt wird, durch den eine Arretierung der Laufrolle 4 erfolgt.

Zum Zurückziehen der Druckstifte 7 aus den Bohrungen 15 ist an der Druckplatte 11 ein nicht dargestellter Mitnehmer vorgesehen, der bei einem Verschieben der Hülse 12 in Richtung des Führungsschlittens 1 und einem gleichzeitigen Zusammendrükken der Druckfeder 13 in eine bajonettverbindungsartig ausgebildete Ausnehmung der Hülse 12 eingreift und dort fixiert wird.

Beim Zurückziehen der Hülse 12 wird gleichzeitig die Druckplatte 11 mit den angeschlossenen Druckstiften 7 zurückgezogen, so daß diese aus dem Überdeckungsbereich mit den Bohrungen 15 kommen.

Anschließend kann das gesamte Andruckelement 6 aus der T-Nut 9 und somit aus dem Führungsschlitten 1 geschoben werden.

Ein Einsetzen des Andruckelementes 6 in den Führungsschlitten 1 erfolgt in umgekehrter Reihenfolge.

### Bezugszeichenliste

- 1: Führungsschlitten
- 2: Tragrohr
- 3: Führungsschiene
- 4: Laufrolle
- 5: Schraube
- 6: Andruckelement
- 7: Druckstift
- 8: Halteplatte
- 9: T-Nut
- 10: Gleitstütze
- 11: Druckplatte
- 12: Hülse
- 13: Druckfeder
- 14: Ausnehmung
- 15: Bohrung
- 16: Laufrolle
- 17: Scheibe

## Patentansprüche

1. Vorrichtung zum Andrücken einer in einem Führungsschlitten (1) mittels einer Schraube (5) festgesetzten Laufrolle (4) an eine Führungsschiene (3) eines Tragrohres (3), auf dem der Führungsschlitten (1) hin und her verfahrbar ist, **dadurch gekennzeichnet, dass** auf der der Führungsschiene (3) gegenüberliegenden Seite der Laufrolle (4) ein Andruckelement (6) vorgesehen ist, das mit einer definierten Federkraft radial gegen die zunächst radial beweglich gehaltene und anschließend arretierte Laufrolle drückt.

2. Vorrichtung nach Anspruch 1, **dadurch gekennzeichnet, daß** das Andruckelement (6) mindestens einen Druckstift aufweist, der mit einer Druckfeder (13) in Wirkverbindung steht und der sich an der Laufrolle (4) abstützt.

3. Vorrichtung nach Anspruch 2, **dadurch gekennzeichnet, daß** zwei parallel und mit Abstand zueinander angeordnete Druckstifte (7) vorgesehen sind, die symmetrisch an der Laufrolle angreifen.

4. Vorrichtung nach Anspruch 2 oder 3, **dadurch gekennzeichnet, daß** die Druckstifte (7) an einer Druckplatte (11) befestigt sind, an der sich die als Schraubenfeder ausgebildete Druckfeder (13) abstützt, die andererseits am Grund einer Ausnehmung (14) einer Hülse (12) anliegt.

5. Vorrichtung nach Anspruch 2 oder 3, **dadurch gekennzeichnet, daß** die Druckstifte (7) durch eine Halteplatte (8) geführt sind, und im Führungsschlitten (1) vorgesehen Bohrungen (15) durchtreten.

6. Vorrichtung nach Anspruch 5, **dadurch gekennzeichnet, daß** die Halteplatte (8) mit einem Gleitstück (10) versehen ist, das in einer parallel zum Tragrohr (2) verlaufenden T-Nut (9) des Führungsschlittens (1) geführt ist.

7. Vorrichtung nach Anspruch 1, **dadurch gekennzeichnet, daß** die Schraube (5) im Überdeckungsbereich mit der Laufrolle (4) in ihrem Durchmesser kleiner ist als der Innendurchmesser der Laufrolle (4).

8. Vorrichtung nach einem oder mehreren der vorhergehenden Ansprüche 3 bis 6, bei der die Führungsschiene (3) als Rundstab ausgebildet und die Laufrolle eine umlaufende, in ihrem Krümmungsradius der Führungsschiene (3) angepaßt konkav ausgeformte Rille (16) aufweist, **dadurch gekennzeichnet, daß** die freien Enden der Druckstifte (7) ballig ausgebildet sind, wobei die Krümmung etwa der Querschnittskrümmung der Rille (16) entspricht.

9. Vorrichtung nach einem oder mehreren der Ansprüche 4 bis 6, **dadurch gekennzeichnet, daß** an der Druckplatte (11) ein Mitnehmer vorgesehen ist, der in eine bajonettverbindungsartige Ausnehmung der Hülse (12) eingreift.

## Claims

1. Device for pressing a guide roller (4), which is fixed in a guide carriage (1) by means of screw (5), against a guide rail (3) of a support tube (2), on which the guide slide (1) is movable back and forth, **characterised in that** provided at the side of the guide roller (4) opposite the guide rail (3) is a pressing element (6) which is pressed by a defined spring force radially against the guide roller which is initially held to be radially movable and is subsequently locked.

2. Device according to claim 1, **characterised in that** the pressing element (6) comprises at least one pressure pin which stands in operative connection with a compression spring (13) and is supported against the guide roller (4).

3. Device according to claim 2, **characterised in that** two parallel pressure pins (7), which are arranged at a spacing from one another and symmetrically engage the guide roller, are provided.

4. Device according to claim 2 or 3, **characterised in that** the pressure pins (7) are fastened to a pressure plate (11), at which the compression spring (13), which is formed as a helical spring and which in turn bears against the base of a recess (14) of a sleeve (12), is supported.

5. Device according to claim 2 or 3, **characterised in that** the pressure pins (7) are led through a retaining plate (8) and pass through bores (15) provided in the guide carriage (1).

6. Device according to claim 5, **characterised in that** the retaining plate (8) is provided with a slide member (10) which is guided in a T-groove (9), which extends parallel to the support tube (2), of the guide carriage (1).

7. Device according to claim 1, **characterised in that** the screw (5) in the region of coincidence with the guide roller (4) is smaller in its diameter than the inner diameter of the guide roller (4).

8. Device according to one or more of the preceding claims 3 to 6, **characterised in that** the guide rail (3) is formed as a round rod and the guide roller has a concavely shaped groove (16) matched in its radius of curvature to the guide rail (3), **characterised in that** the free ends of the pressure pin (7) are formed to be rounded, wherein the curvature approximately corresponds with the cross-sectional curvature of the groove (16).

9. Device according to one or more of the preceding claims 4 to 6, **characterised in that** provided at the pressure plate (11) is an entrainer which engages in a recess of the sleeve (12) in the manner of a bayonet connection.

## Revendications

1. Dispositif pour presser un galet de roulement (4), fixé dans un chariot de guidage (1) au moyen d'une vis (5), contre un rail de guidage (3) d'un tube porteur (2), sur lequel le chariot de guidage (1) peut être déplacé dans un sens et dans l'autre, **caractérisé en ce que** sur le côté du galet de roulement (4), opposé au rail de guidage (3), il est prévu un élément de pression (6) qui presse radialement, par une force de ressort définie, contre le galet de roulement d'abord maintenu déplaçable radialement, puis bloqué.

2. Dispositif selon la revendication 1, **caractérisé en ce que** l'élément de pression (6) comporte au moins un doigt de pression qui est en liaison active avec un ressort de pression (13) et qui prend appui contre le galet de roulement (4).

3. Dispositif selon la revendication 2, **caractérisé en ce que** sont prévus deux doigts de pression (7) disposés parallèlement et à distance entre eux, qui agissent symétriquement sur le galet de roulement.

4. Dispositif selon la revendication 2 ou 3, **caractérisé en ce que** les doigts de pression (7) sont fixés à une plaque de pression (11), contre laquelle prend appui le ressort de pression (13) conformé en ressort hélicoïdal, et qui s'applique, d'autre part, contre le fond d'un évidement (14) d'une douille (12).

5. Dispositif selon la revendication 2 ou 3, **caractérisé en ce que** les doigts de pression (7) sont guidés par une plaque de maintien (8), et traversent des trous (15) prévus dans le chariot de guidage (1).

6. Dispositif selon la revendication 5, **caractérisé en ce que** la plaque de maintien (8) est pourvue d'un coulisseau (10) qui est guidé dans une rainure en T (9) du chariot de guidage (1), parallèle au tube porteur (2).

7. Dispositif selon la revendication 1, **caractérisé en ce que** la vis (5) présente, dans la zone de recouvrement avec le galet de roulement (4), un diamètre inférieur au diamètre intérieur du galet de roulement (4).

8. Dispositif selon une ou plusieurs des revendications 3 à 6 précédentes, dans lequel le rail de guidage (3) est conformé en barre ronde et le galet de roulement présente une gorge périphérique (16), de forme concave adaptée dans son rayon de courbure au rail de guidage (3), **caractérisé en ce que** les extrémités libres des doigts de pression (7) sont bombées, la courbure correspondant approximativement à la courbure de la section transversale de la gorge (16).

9. Dispositif selon une ou plusieurs des revendications 4 à 6, **caractérisé en ce qu'**il est prévu sur la plaque de pression (11) un entraîneur qui s'engage dans un évidement de type liaison à baïonnette de la douille (12).
